(19) Europäisches Patentamt
European Patent Office
Office européen des brevets

(11) **EP 4 738 821 A1**

(12) **EUROPEAN PATENT APPLICATION**
published in accordance with Art. 153(4) EPC

(43) Date of publication:
06.05.2026 Bulletin 2026/19

(21) Application number: 24830532.8

(22) Date of filing: 14.06.2024

(51) International Patent Classification (IPC):
*H04N 19/137* (2014.01)

(86) International application number:
PCT/CN2024/099372

(87) International publication number:
WO 2025/001886 (02.01.2025 Gazette 2025/01)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 28.06.2023 CN 202310777782

(71) Applicant: Peninsula Information Technologies Inc
Chaoyang District, Beijing 100102 (CN)

(72) Inventor: ZHANG, Xu
Beijing 100102 (CN)

(74) Representative: Galdagon, Atheer Fakhreldin Ali
Withers & Rogers LLP
2 London Bridge
London SE1 9RA (GB)

(54) **MOTION SEARCH PROCESSING METHOD, SYSTEM AND DEVICE FOR VIDEO CODING, AND STORAGE MEDIUM**

(57) Disclosed in the embodiments of the present application are a motion search processing method, system and device for video coding, and a storage medium. The technical solution provided in the embodiments of the present application comprises: during a motion search process of video coding, determining an optimal start point on the basis of an integer pixel search, and performing a sub-pixel search on reference blocks one by one starting from a reference block corresponding to the optimal start point (S110); during the sub-pixel search, calculating gradient information in a direction corresponding to the current reference block, comparing the gradient information with a set gradient threshold value, according to a comparison result, performing skip determination on a sub-pixel search flow in the direction corresponding to the current reference block, and under a first set situation, skipping the sub-pixel search flow in the direction corresponding to the current reference block (S 120); and acquiring a real-time minimum distortion cost of the current reference block and the sum of absolute values of prediction residuals of an optimal mode, performing skip determination on sub-pixel search flows in all directions of the current reference block according to the gradient information, the minimum distortion cost and the sum of the absolute values of the prediction residuals, and skipping the sub-pixel search flows in all directions of the current reference block under a second set situation (S 130). By means of the method, during a pixel search, parts having relatively small gradients are screened out and sub-pixel search flows thereof are skipped, thereby reducing the time consumption of a motion search, and thus improving the video coding efficiency.

During a motion search for video coding, determining an optimal starting point based on integer-pixel search, and performing sub-pixel search on reference blocks one by one starting from a reference block corresponding to the optimal starting point ⟋S110

During the sub-pixel search, calculating gradient information of a current reference block in a corresponding direction, comparing the gradient information with a predetermined gradient threshold, determining whether to skip a sub-pixel search process for the current reference block in the corresponding direction based on a comparison result, and in a first predetermined case, skipping the sub-pixel search process for the current reference block in the corresponding direction ⟋S120

Acquiring a real-time minimum rate distortion cost and a sum of absolute transformed difference of an optimal mode for the current reference block, determining whether to skip a sub-pixel search process for the current reference block in all directions based on the gradient information, the minimum rate distortion cost, and the sum of absolute transformed difference, and in a second predetermined case, skipping the sub-pixel search process for the current reference block in all directions ⟋S130

FIG. 1

## Description

The present disclosure claims priority to Chinese Patent Application No. 202310777782.9, filed on June 28, 2023, the entire disclosure of which is incorporated herein by reference.

## TECHNICAL FIELD

Embodiments of the present disclosure relate to the field of video coding technologies, and in particular, relate to a motion search processing method for video coding, a motion search processing system for video coding, a motion search processing device for video coding, and a storage medium.

## BACKGROUND

At present, motion search is employed during video coding to enhance coding information. The basic concept of motion search involves dividing each frame of an image sequence into many non-overlapping macroblocks, and considering that all pixels within a macroblock have the same displacement. Then, for each macroblock, a block most similar to a current block, i.e., a matching block, is identified within a specific search range in a reference frame according to a certain matching criterion. A relative displacement between the matching block and the current block is a motion vector. During video compression, only the motion vector and residual data need to be stored to fully restore the current block.

However, related motion search solutions require complex computational procedures to improve video coding performance, which results in a time-consuming process. For some scenarios with high requirements for real-time video coding, the complex motion search process fails to meet the real-time requirements, leading to a relatively poor user experience.

## SUMMARY

Embodiments of the present disclosure provide a motion search processing method for video coding, a motion search processing system for video coding, a motion search processing device for video coding, and a storage medium, which can simplify the motion search process while ensuring video coding quality, improve video coding efficiency, and solve the technical problem that related motion search solutions result in a time-consuming process.

In a first aspect, the embodiments of the present disclosure provide a motion search processing method for video coding. The method includes:

during a motion search for video coding, determining an optimal starting point based on an integer-pixel search, and performing sub-pixel search on reference blocks one by one starting from a reference block corresponding to the optimal starting point;

during the sub-pixel search, calculating gradient information of a current reference block in a corresponding direction, comparing the gradient information with a predetermined gradient threshold, determining whether to skip a sub-pixel search process for the current reference block in the corresponding direction based on a comparison result, and in a first predetermined case, skipping the sub-pixel search process for the current reference block in the corresponding direction; and

acquiring a real-time minimum rate distortion cost and a sum of absolute transformed difference of an optimal mode for the current reference block, determining whether to skip a sub-pixel search process for the current reference block in all directions based on the gradient information, the minimum rate distortion cost, and the sum of absolute transformed difference, and in a second predetermined case, skipping the sub-pixel search process for the current reference block in all directions.

In a second aspect, the embodiments of the present disclosure provide a motion search processing system for video coding. The system includes:

a motion search module, configured to: during a motion search for video coding, determine an optimal starting point based on an integer-pixel search, and perform a sub-pixel search on reference blocks one by one starting from a reference block corresponding to the optimal starting point;

a first process skipping module, configured to: during the sub-pixel search, calculate gradient information of a current reference block in a corresponding direction, compare the gradient information with a predetermined gradient threshold, determine whether to skip a sub-pixel search process for the current reference block in the corresponding direction based on a comparison result, and in a first predetermined case, skip the sub-pixel search process for the current reference block in the corresponding direction; and

a second process skipping module, configured to: acquire a real-time minimum rate distortion cost and a sum of absolute transformed difference of an optimal mode for the current reference block, determine whether to skip a sub-pixel search process for the current reference block in all directions based on the gradient information, the minimum rate distortion cost, and the sum of absolute transformed difference, and in a second predetermined case, skip the sub-pixel search process for the current reference block in all directions.

In a third aspect, the embodiments of the present disclosure provide a motion search processing device for video coding. The device includes: a memory and one or more processors.

The memory is configured to store one or more programs, which when executed by the one or more processors, cause the one or more processors to perform the motion search processing method for video coding as described in the first aspect.

In a fourth aspect, the embodiments of the present disclosure provide a computer-readable storage medium. The computer-readable storage medium stores one or more computer-executable instructions, which when executed by a processor of a computer, cause the computer to perform the motion search processing method for video coding as described in the first aspect.

In a fifth aspect, the embodiments of the present disclosure provide a computer program product. The computer program product includes one or more instructions. The one or more instructions, when executed by a computer or a processor, cause the computer or the processor to perform the motion search processing method for video coding as described in the first aspect.

According to the embodiments of the present disclosure, during a motion search for video coding, an optimal starting point is determined based on integer-pixel search, and sub-pixel search is performed on reference blocks one by one starting from a reference block corresponding to the optimal starting point; during the sub-pixel search, gradient information of a current reference block in a corresponding direction is calculated, the gradient information is compared with a predetermined gradient threshold, whether to skip a sub-pixel search process for the current reference block in the corresponding direction is determined based on a comparison result, and in a first predetermined case, the sub-pixel search process for the current reference block in the corresponding direction is skipped; a real-time minimum rate distortion cost and a sum of absolute transformed difference of an optimal mode for the current reference block are acquired, whether to skip a sub-pixel search process for the current reference block in all directions is determined based on the gradient information, the minimum rate distortion cost, and the sum of absolute transformed difference, and in a second predetermined case, the sub-pixel search process for the current reference block in all directions is skipped. In this way, in the pixel search process, some reference blocks with relatively small gradients are screened, and sub-pixel search processes thereof are skipped, thereby simplifying the motion search process, reducing time consumption of the motion search, and hence improving video coding efficiency.

## BRIEF DESCRIPTION OF DRAWINGS

FIG. 1 is a flowchart of a motion search processing method for video coding according to some embodiments of the present disclosure;
FIG. 2 is a flowchart of motion search according to some embodiments of the present disclosure;
FIG. 3 is a flowchart of skipping sub-pixel search according to some embodiments of the present disclosure;
FIG. 4 is a schematic structural diagram of a motion search processing system for video coding according to some embodiments of the present disclosure; and
FIG. 5 is a schematic structural diagram of a motion search processing device for video coding according to some embodiments of the present disclosure.

## DETAILED DESCRIPTION

For clearer descriptions of the objectives, technical solutions, and advantages of the present disclosure, some embodiments of the present disclosure are further described in detail below with reference to the accompanying drawings. It should be understood that the embodiments described herein are merely used for explaining the present disclosure, but do not construct a limitation to the present disclosure. In addition, it should be further noted that for convenience of description, only the portions associated with the present disclosure, rather than the entire content, are shown in the accompanying drawings. Before further discussing exemplary embodiments in detail, it should be noted that some exemplary embodiments are described as processes or methods depicted as flowcharts. Although a flowchart describes operations (or steps) as sequential processing, many of the operations may be performed in parallel, concurrently, or simultaneously. In addition, the order of the operations may be rearranged. The process may be terminated when its operations are completed, but may have additional steps that are not included in the accompanying drawings. The process may correspond to a method, a function, a procedure, a subroutine, a subprogram, and the like.

A motion search processing method for video coding provided according to the present disclosure aims to, in a motion search process, screen some reference blocks with small gradients during pixel search and skip sub-pixel search processes thereof, so as to achieve simplification of the motion search process and improve motion search efficiency.

In related video coding scenarios, for performance gains of video coding, the computational complexity of the coding process of the video coding is high. Regarding the motion search process therein, the entire process is time-consuming. However, in specific applications, there exist some encoders and coding scenarios having nearly stringent requirements for real-time performance. Moreover, due to different businesses, characteristics of to-be-coded sequences are also different from each other, such as natural videos with intense and irregular motion and videos mainly for live streaming, and effects of using different algorithms thereon are also different from each other. For these scenarios with high requirements for real-time video coding, the complex motion search process makes it difficult to meet the real-time requirements. Based on this, a motion search processing method for video coding according to the embodiments of the present disclosure is provided to optimize the motion search process, improve video coding efficiency, and solve the technical problem of long time consumption in related motion search solutions.

Embodiments:

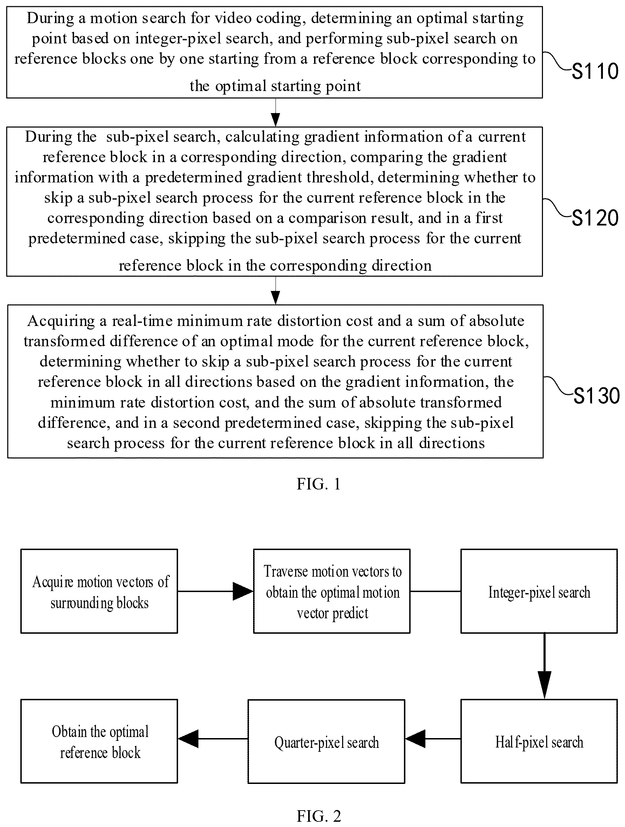

FIG. 1 shows a flowchart of a motion search processing method for video coding according to some embodiments of the present disclosure. The motion search processing method for video coding provided in the embodiments may be performed by a motion search processing device for video coding. The motion search processing device for video coding may be implemented by means of software and/or hardware. The motion search processing device for video coding may be composed of two or more physical entities, or may be composed of one physical entity. Generally speaking, the motion search processing device for video coding may be a computing device such as an encoder device, a computer, a mobile phone, or a tablet.

The following description takes the motion search processing device for video coding as a subject for performing the motion search processing method for video coding as an example. Referring to FIG. 1, the motion search processing method for video coding specifically includes the following processes.

In S110, during a motion search for video coding, an optimal starting point is determined based on integer-pixel search, and sub-pixel search is performed on reference blocks one by one starting from a reference block corresponding to the optimal starting point.

In S120, during the sub-pixel search, gradient information of a current reference block in a corresponding direction is calculated, the gradient information is compared with a predetermined gradient threshold, whether to skip a sub-pixel search process for the current reference block in the corresponding direction is determined based on a comparison result, and in a first predetermined case, the sub-pixel search process for the current reference block in the corresponding direction is skipped.

In S130, a real-time minimum rate distortion cost and a sum of absolute transformed difference of an optimal mode for the current reference block are acquired, whether to skip a sub-pixel search process for the current reference block in all directions is determined based on the gradient information, the minimum rate distortion cost, and the sum of absolute transformed difference, and in a second predetermined case, the sub-pixel search process for the current reference block in all directions is skipped.

In the present disclosure, when performing motion search processing for video coding, by screening partial processes of a motion search process, selecting partial motion search processes having a small impact on motion search results and video coding quality, and skipping these partial processes, optimization of the motion search process is achieved, motion search time consumption is shortened, and video coding efficiency is improved.

Taking an HEVC encoder as an example, referring to FIG. 2, when performing motion search for a current coding block, firstly, motion vectors (mv) of coding blocks surrounding a current reference block are acquired, and each motion vector is traversed to predict an optimal motion vector (motion vector predict, mvp). Subsequently, based on the found optimal motion vector, integer-pixel search is performed sequentially to find an optimal motion vector of the integer-pixel search. Half-pixel search is performed based on the optimal motion vector of the integer-pixel search to find an optimal motion vector of the half-pixel search. Quarter-pixel search is performed based on the optimal motion vector of the half-pixel search to calculate an optimal motion vector of the quarter-pixel search, thereby obtaining a corresponding optimal reference block, i.e., a matching block, and completing the motion search process.

Based on the above motion search process, the present disclosure achieves optimization of the motion search process according to the embodiments of the present disclosure by screening and skipping partial processes therein that have a small impact on motion search results. Since these partial processes have a small impact on the motion search results and thus a small impact on final coding quality, these partial processes can be skipped. Moreover, since pre-coding is an indispensable part of an actual coding process, pre-fetching un-coded frames to perform down-sampling and simple analysis thereon can yield a large amount of coding information, so as to provide guidance for subsequent rate control and the actual coding process. The motion search operation is also required during the pre-coding process. In HEVC, the motion search in pre-coding is consistent with the motion search in actual coding; therefore, the motion search process in pre-coding can also be adaptively screened for skipping.

Corresponding to the motion search in the pre-coding process, motion vectors mv of coding blocks surrounding a current reference block are acquired in the pre-coding process to calculate an optimal motion vector mvp. A rate distortion cost of the optimal motion vector mvpcost is obtained based on the optimal motion vector mvp. Since the pre-coding process is not formal coding but occupies a large proportion of the formal coding process, for a coding block having a rate distortion cost smaller than a certain threshold, the entire motion search process thereof can be directly skipped, thereby achieving a considerable coding acceleration effect with minimal quality loss.

In addition, in the case where the entire motion search process is not directly skipped during the pre-coding process, it may be further determined whether an integer-pixel search part in the motion search can be skipped. Since the image has been down-sampled in the pre-coding process and image information distribution is more concentrated, the integer-pixel search can be skipped for some special blocks. For example, a live streaming video sequence usually mainly features a moving streamer, while a background where the streamer is located is relatively constant; therefore, coding tree units located in a bottommost row of the sequence is often relatively fixed, and skipping the integer-pixel search for these blocks will not cause loss in coding results. Similarly, for a reference block where a rate distortion cost of the optimal motion vector mvpcost is small, it can be considered that prediction of the optimal motion vector mvp is already accurate, and there is no need to perform a complex integer-pixel search again; therefore, the reference block with the small optimal motion vector mvp may also directly skip the integer-pixel search process.

Subsequently, in formal video coding, motion search is also required. After the integer-pixel search, since an approximate range of the reference block has been determined, a shifted reference block can be obtained. In this case, based on the optimal motion vector mvp determined by the integer-pixel search, an optimal starting point for the sub-pixel search is determined, and the sub-pixel search is performed on reference blocks one by one starting from a reference block corresponding to the optimal starting point. During the sub-pixel search, gradient information of a current reference block in corresponding directions (a horizontal direction and a vertical direction) is first calculated; in the case where the gradient information in the corresponding direction is small, i.e., lower than a predetermined gradient threshold, it is determined that a first predetermined case is currently met, and in this case, a sub-pixel search process for the current reference block in the corresponding direction is skipped.

In addition, according to the present disclosure, a real-time minimum rate distortion cost and a sum of absolute transformed difference of an optimal mode for the current reference block are acquired, and in combination with the gradient information, it is further determined whether to skip the sub-pixel search process for the current reference block in all directions. Based on the gradient information, the minimum rate distortion cost, and the sum of absolute transformed difference, if it is determined that a second predetermined case is currently met, it is deemed that gradient information around the current reference block is all relatively small, and the entire sub-pixel search process can be directly skipped.

In this way, by skipping the motion search process under different cases, simplification and acceleration of motion search are achieved, and the coding effect is improved. It should be noted that in practical applications, whether to skip the sub-pixel search process in pre-coding, or the entire motion search process or the integer-pixel search process in formal coding may also be adaptively determined. According to the embodiments of the present disclosure, it is determined, through actual tests, that skipping the motion search process or the integer-pixel search process in the pre-coding, as well as the sub-pixel search process in the formal coding, can improve motion search efficiency while ensuring coding quality. Therefore, adaptively determining whether to skip motion search is selected. According to actual process simplification requirements, corresponding motion search processes can be adaptively selected for simplification. The embodiments of the present disclosure do not impose fixed limitations on specific simplification details, which will not be repeated herein.

Specifically, in a motion search process of video pre-coding, a rate distortion cost of a predicted optimal motion vector is compared with a first predetermined cost threshold; and in the case where the rate distortion cost is less than or equal to the predetermined cost threshold, the motion search for video pre-coding is skipped.

According to encoder logic, in the pre-coding, a rate distortion cost (rdcost) between a current block and a reference block is estimated in a function estimateCuCost. In the case of finding an optimal reference block, motion vectors mv of surrounding blocks are first acquired, and reference blocks corresponding to the motion vectors in a reference frame are calculated. After motion compensation, a sum of absolute transformed difference between the reference block and the current block is calculated. All motion vectors are traversed, and a motion vector with a minimum sum of absolute transformed difference is saved as an optimal motion vector mvp, with a corresponding rate distortion cost being mvpcost. In original logic, a motion search process is directly performed, and a searched mvcost is compared with the previously obtained mvpcost to select an optimal mv. In the present disclosure, a precondition is added to the motion search process of pre-coding. Only when the rate distortion cost of the optimal motion vector is greater than the predetermined cost threshold (i.e., mvpcost > K1, where K1 is set to 256), will the motion search be entered; otherwise, the current mvp is directly used as an optimal motion vector to complete the entire motion search process of pre-coding.

After comparing the rate distortion cost of the predicted optimal motion vector with the first predetermined cost threshold, the method further includes: performing integer-pixel search on reference blocks one by one, determining a reference block that is in a predetermined smooth motion state, and skipping an integer-pixel search process for a corresponding reference block.

In the case where the motion search is not skipped during the pre-coding, the process directly enters a function MotionEstimate, and in this case, the integer-pixel search part within the motion search can still be simplified. For a last row in the pre-coding, it is often considered more likely to be background blocks with smooth motion or no motion, and it is considered that these reference blocks are in the predetermined smooth motion state and do not require extensive motion search. For these blocks, a flag skipPixelSearch is set to 1, and the integer-pixel search is directly skipped for the reference blocks with the flag skipPixelSearch = 1. It should be noted that in practical applications, reference blocks at corresponding positions can be adaptively set to be in the predetermined smooth motion state based on distribution positions of background blocks with smooth motion or no motion in an actual video image, so as to perform flag marking.

In addition, after comparing the rate distortion cost of the predicted optimal motion vector with the first predetermined cost threshold, the method further includes: performing integer-pixel search on reference blocks one by one, and in the case where a rate distortion cost of an optimal motion vector for the current reference block is less than an optimal intra-frame rate distortion cost for the current reference block and the rate distortion cost is less than a second predetermined cost threshold, skipping an integer-pixel search process for the current reference block.

It can be understood that in the case where the rate distortion cost of the predicted optimal motion vector, mvpcost, is less than the optimal intra-frame rate distortion cost intracost of the current reference block, and the rate distortion cost of the optimal motion vector mvpcost is less than the second predetermined cost threshold (mvpcost < K2, K2 = min(1024, intracost)), it is considered that the effect of predicting the current block using the optimal motion vector mvp is good, and a relatively simpler motion search algorithm can be used; similarly, the flag skipPixelSearch of the current reference block is set to 1. In the subsequent motion search, if skipPixelSearch of the reference block is 1, the integer-pixel search process of the reference block is directly skipped to enter sub-pixel search, thereby ensuring no loss in coding quality and significantly improving coding speed.

Further, after the motion search simplification of the above-mentioned pre-coding process is completed, in a formal coding process, the sub-pixel search of the motion search of formal coding is further processed according to the present disclosure. The above motion search optimizations are all optimizations in the pre-coding process, and since motion search in normal coding is more complex, there is a larger room for optimization. Moreover, in the case of high video resolution, directly skipping the motion search or skipping the integer-pixel search leads to a large loss in video coding quality. Therefore, in the formal coding process, the present disclosure chooses to attempt skipping a half-pixel search and a quarter-pixel search of the motion search thereof, so as to achieve motion search process optimization in the formal coding process.

The motion search of the formal coding is consistent with the motion search in the pre-coding, both first attempt to find an optimal motion vector mvp, and then perform search starting from a position corresponding to the optimal motion vector based on different search algorithms. In mobile live streaming, the simplest diamond search algorithm is generally used to find an optimal motion vector of an integer-pixel search by means of the integer-pixel search. Based on the optimal motion vector of the integer-pixel search, a half-pixel search and a quarter-pixel search are further performed.

In the present disclosure, the sub-pixel search includes a half-pixel search and a quarter-pixel search. The quarter-pixel search is performed after the half-pixel search, and a determination condition for skipping the sub-pixel search process is updated in real time. By updating the determination condition for the quarter-pixel search after the half-pixel search, a more precise determination of a motion search process is achieved. The updating of the determination condition specifically includes the predetermined gradient threshold, and relevant comparison information where the gradient information, the minimum rate distortion cost, and the sum of absolute transformed difference are in a second predetermined case.

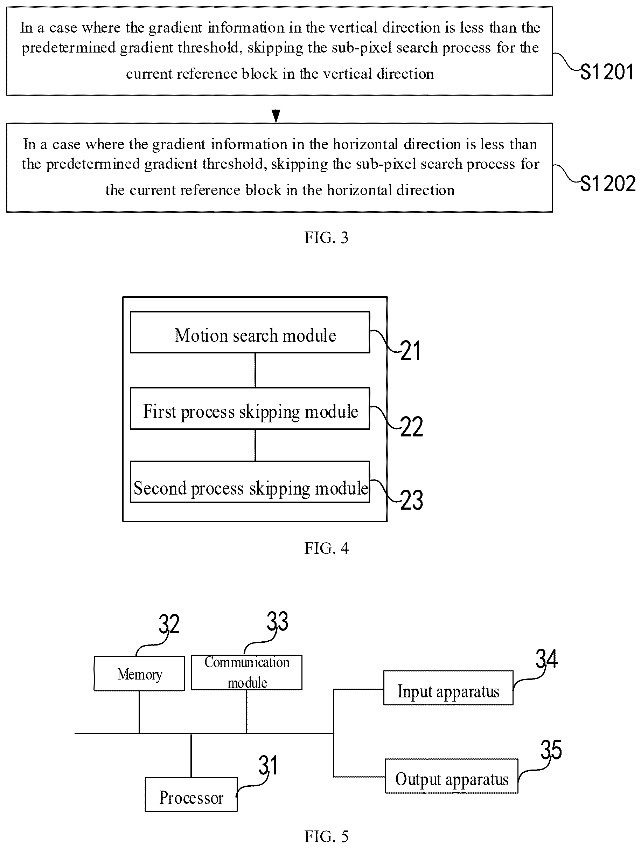

Specifically, referring to FIG. 3, the predetermined gradient threshold is set based on bi-directional prediction information and a height and a width of the current reference block; the corresponding direction includes a vertical direction and a horizontal direction.

In the first predetermined case, skipping the sub-pixel search process for the current reference block in the corresponding direction includes the following processes.

In S1201, in the case where the gradient information in the vertical direction is less than the predetermined gradient threshold, the sub-pixel search process for the current reference block in the vertical direction is skipped.

In S1202, in the case where the gradient information in the horizontal direction is less than the predetermined gradient threshold, the sub-pixel search process for the current reference block in the horizontal direction is skipped.

Since a reference block corresponding to an optimal starting point is found after the integer-pixel search, it is already close to an optimal reference block. Therefore, in order to roughly understand reference block information, gradients of the current reference block can be calculated directly starting from the starting point, primarily calculating gradients in the horizontal direction and the vertical direction. A gradient threshold M is established, and in an encoder:

$$M = (2 + bBipred) * blockheight * blockwidth >> 1$$

bBipred represents whether bi-directional prediction is enabled, blockheight represents the height of the current reference block, and blockwidth represents the width of the current reference block. Let vgrad represent the gradient of the current reference block in the vertical direction; in the case of vgrad < M, the half-pixel search process for the current reference block in the vertical direction is skipped. The horizontal direction works similarly, by calculating gradient information in the horizontal direction and comparing the gradient information with the gradient threshold M, in the case where the gradient information in the horizontal direction is less than the predetermined gradient threshold, the sub-pixel search process for the current reference block in the horizontal direction is skipped.

In the second predetermined case, skipping the sub-pixel search process for the current reference block in all directions includes the following processes.

The sub-pixel search process for the current reference block in all directions is skipped upon determining that pixels of the current reference block are in a predetermined smooth state based on the gradient information, the minimum rate distortion cost, and the sum of absolute transformed difference.

In addition to the determination step for skipping the sub-pixel search process, in the present disclosure, the determination for skipping the sub-pixel search process in the second predetermined case is also synchronously performed. Let the minimum rate distortion cost for the current reference block be boost, and let the sum of absolute transformed difference of the optimal mode be bestSatd. Then, when the following formulas are satisfied:

$$hgrad + vgrad < 7 * bcost / 8$$

or,

$$ibcost - ((vgrad + hgrad) >> 2) > bestSatd$$

it is considered that the current block is already relatively smooth and is in the second predetermined case, and it is no longer the cause of the large bcost, therefore, the sub-pixel search process for the current reference block in all directions is skipped.

The half-pixel search for the current reference block is thereby completed. Afterwards, in the quarter-pixel search process, referring to the determination in the first predetermined case, gradient information of the reference block is calculated; in the case where vgrad < 2 * M, the quarter-pixel search for the current reference block in the corresponding direction is skipped. The half-pixel search process and the quarter-pixel search process differ only in that the determination condition for skipping the search process is updated, and other processes remain unchanged, which are not repeated herein.

Regarding the determination of the quarter-pixel search process in the second predetermined case, similarly, since bcost has been updated after the half-pixel search, a termination condition for determining to skip the quarter-pixel search should be updated in this case. When the following formulas are satisfied:

$$hgrad + vgrad < bcost$$

or

$$(bcost - ((vgrad + hgrad) >> 2) > (3 * bestSatd >> 2))$$

the quarter-pixel search can be directly skipped. It should be noted that since the content of blocks of the same size at high resolutions is sparser and redundancy in motion search is relatively large, the effect of this skipping the sub-pixel search is relatively good; conversely, the content of sequence videos with low resolutions is overly concentrated, which is not suitable for relevant optimization. Therefore, the optimization of skipping the sub-pixel search yields better effects under corresponding resolution cases. In practical applications, by identifying a resolution of a to-be-coded video, a to-be-coded video with a corresponding resolution can be selected to perform a motion search processing flow for video coding, thereby achieving optimization of motion search and improving video coding efficiency.

It should be noted that in practical applications, in a formal coding process, the motion search process can also be optimized by using the motion estimation skipping logic and integer pixel skipping logic described above. Similarly, in a pre-coding process, the sub-pixel skipping logic can also be used to optimize the motion search process. According to actual tests, the embodiments of the present disclosure choose to skip using the motion estimation skipping logic and the integer pixel skipping logic in the pre-coding process, and use the sub-pixel skipping logic in the formal coding process, which can simplify the motion search process and improve video coding efficiency while ensuring coding quality. According to the measurement of an actual coding quality loss situation and an optimization benefit of the motion search process, corresponding skipping logic can be adaptively selected to optimize the motion search process.

As described above, during a motion search in video coding, an optimal starting point is determined based on integer-pixel search, and sub-pixel search is performed on reference blocks one by one starting from a reference block corresponding to the optimal starting point; in a sub-pixel search process, gradient information of a current reference block in a corresponding direction is calculated, the gradient information is compared with a predetermined gradient threshold, whether to skip a sub-pixel search process for the current reference block in the corresponding direction is determined based on a comparison result, and in a first predetermined case, the sub-pixel search process for the current reference block in the corresponding direction is skipped; a real-time minimum rate distortion cost and a sum of absolute transformed difference of an optimal mode for the current reference block are acquired, whether to skip a sub-pixel search process for the current reference block in all directions is determined based on the gradient information, the minimum rate distortion cost, and the sum of absolute transformed difference, and in a second predetermined case, the sub-pixel search process for the current reference block in all directions is skipped. In this way, in the pixel search process, some reference blocks with small gradients are screened, and sub-pixel search processes thereof are skipped, thereby simplifying the motion search process, reducing time consumption of the motion search, and hence improving video coding efficiency.

Based on the above embodiments, FIG. 4 is a schematic structural diagram of a motion search processing system for video coding according to some embodiments of the present disclosure. Referring to FIG. 4, the motion search processing system for video coding according to the embodiments specifically includes: a motion search module 21, a first process skipping module 22, and a second process skipping module 23.

The motion search module 21 is configured to: during a motion search for video coding, determine an optimal starting point based on integer-pixel search, and perform sub-pixel search on reference blocks one by one starting from a reference block corresponding to the optimal starting point.

The first process skipping module 22 is configured to: during the sub-pixel search, calculate gradient information of a current reference block in a corresponding direction, compare the gradient information with a predetermined gradient threshold, determine whether to skip a sub-pixel search process for the current reference block in the corresponding direction based on a comparison result, and in a first predetermined case, skip the sub-pixel search process for the current reference block in the corresponding direction.

The second process skipping module 23 is configured to: acquire a real-time minimum rate distortion cost and a sum of absolute transformed difference of an optimal mode for the current reference block, determine whether to skip a sub-pixel search process for the current reference block in all directions based on the gradient information, the minimum rate distortion cost, and the sum of absolute transformed difference, and in a second predetermined case, skip the sub-pixel search process for the current reference block in all directions.

Specifically, during the motion search of video pre-coding, a rate distortion cost of a predicted optimal motion vector is compared with a first predetermined cost threshold; in the case where the rate distortion cost is less than or equal to the predetermined cost threshold, the motion search for video pre-coding is skipped.

After comparing the rate distortion cost of the predicted optimal motion vector with the first predetermined cost threshold, the method further includes the following processes.

An integer-pixel search is performed on reference blocks one by one, a reference block that is in a predetermined smooth motion state is determined, and an integer-pixel search process for a corresponding reference block is skipped.

An integer-pixel search is performed on reference blocks one by one, and in the case where a rate distortion cost of an optimal motion vector for the current reference block is less than an optimal intra-frame rate distortion cost for the current reference block and the rate distortion cost is less than a second predetermined cost threshold, an integer-pixel search process for the current reference block is skipped.

Specifically, the sub-pixel search includes a half-pixel search and a quarter-pixel search. The quarter-pixel search is performed after the half-pixel search, and a determination condition for skipping the sub-pixel search process is updated in real time.

Specifically, the predetermined gradient threshold is set based on bi-directional prediction information and a height and a width of the current reference block; the corresponding direction includes a vertical direction and a horizontal direction.

Skipping, in the first predetermined case, the sub-pixel search process for the current reference block in the corresponding direction includes the following processes.

In the case where the gradient information in the vertical direction is less than the predetermined gradient threshold, the sub-pixel search process for the current reference block in the vertical direction is skipped.

In the case where the gradient information in the horizontal direction is less than the predetermined gradient threshold, the sub-pixel search process for the current reference block in the horizontal direction is skipped.

Skipping, in the second predetermined case, the sub-pixel search process for the current reference block in all directions includes the following processes.

The sub-pixel search process for the current reference block in all directions is skipped upon determining that pixels of the current reference block are in a predetermined smooth state based on the gradient information, the minimum rate distortion cost, and the sum of absolute transformed difference.

As described above, in a motion search process in video coding, an optimal starting point is determined based on an integer-pixel search, and a sub-pixel search is performed on reference blocks one by one starting from a reference block corresponding to the optimal starting point; in a sub-pixel search process, gradient information of a current reference block in a corresponding direction is calculated, the gradient information is compared with a predetermined gradient threshold, whether to skip a sub-pixel search process for the current reference block in the corresponding direction is determined based on a comparison result, and in a first predetermined case, the sub-pixel search process for the current reference block in the corresponding direction is skipped; a real-time minimum rate distortion cost and a sum of absolute transformed difference of an optimal mode for the current reference block are acquired, whether to skip a sub-pixel search process for the current reference block in all directions is determined based on the gradient information, the minimum rate distortion cost, and the sum of absolute transformed difference, and in a second predetermined case, the sub-pixel search process for the current reference block in all directions is skipped. In this way, in the pixel search process, some reference blocks with small gradients are screened, and sub-pixel search processes thereof are skipped, thereby simplifying the motion search process, reducing time consumption of the motion search, and hence improving video coding efficiency.

The motion search processing system for video coding according to the embodiments of the present disclosure may be configured to perform the motion search processing method for video coding as provided in the above embodiments, and possesses corresponding functions and beneficial effects.

Based on the above embodiments, the embodiments of the present disclosure further provide a motion search processing device for video coding. Referring to FIG. 5, the motion search processing device for video coding includes: a processor 31, a memory 32, a communication module 33, an input apparatus 34, and an output apparatus 35. The memory, as a computer-readable storage medium, may be configured to store one or more software programs, one or more computer-executable programs, and one or more modules, such as program instructions/modules corresponding to the motion search processing method for video coding described in any embodiment of the present disclosure (for example, the motion search module, the first process skipping module, and the second process skipping module in the motion search processing system for video coding). The communication module is configured to perform data transmission. The processor runs the one or more software programs, the one or more instructions, and the one or more modules stored in the memory to perform various functional applications and data processing of the device, that is, to implement the motion search processing method for video coding described above. The input apparatus may be configured to receive input numeric or character information and produce key signal inputs related to user settings and function control of the device. The output apparatus may include display devices such as a display screen. The motion search processing device for video coding provided above may be configured to perform the motion search processing method for video coding as provided in the above embodiments, and possesses corresponding functions and beneficial effects.

Based on the above embodiments, the embodiments of the present disclosure further provide a computer-readable storage medium. The computer-readable storage medium stores one or more computer-executable instructions. The one or more computer-executable instructions, when executed by a processor of a computer, cause the computer to perform a motion search processing method for video coding. The storage medium may be any of various types of memory devices or storage devices. In addition, according to the computer-readable storage medium provided in the embodiments of the present disclosure, the one or more computer-executable instructions thereof are not limited to the motion search processing method for video coding as described above, but may also cause the computer to perform related operations in the motion search processing method for video coding as provided in any embodiment of the present disclosure.

Based on the above embodiments, the embodiments of the present disclosure further provide a computer program product. The technical solutions of the present disclosure, in essence or in terms of contributing to the prior art, or all or part of the technical solutions, may be embodied in the form of a software product. The computer program product is stored in a storage medium and includes several instructions for causing a computer device, a mobile terminal, or a processor thereof, to perform all or part of the processes of the motion search processing method for video coding as described in the embodiments of the present disclosure.

**Claims**

1. A motion search processing method for video coding, comprising:

    during a motion search for video coding, determining an optimal starting point based on integer-pixel search, and performing sub-pixel search on reference blocks one by one starting from a reference block corresponding to the optimal starting point;

during the sub-pixel search, calculating gradient information of a current reference block in a corresponding direction, comparing the gradient information with a predetermined gradient threshold, determining whether to skip a sub-pixel search process for the current reference block in the corresponding direction based on a comparison result, and in a first predetermined case, skipping the sub-pixel search process for the current reference block in the corresponding direction; and

acquiring a real-time minimum rate distortion cost and a sum of absolute transformed difference of an optimal mode for the current reference block, determining whether to skip a sub-pixel search process for the current reference block in all directions based on the gradient information, the minimum rate distortion cost, and the sum of absolute transformed difference, and in a second predetermined case, skipping the sub-pixel search process for the current reference block in all directions.

2. The motion search processing method for video coding according to claim 1, wherein the predetermined gradient threshold is set based on bi-directional prediction information and a height and a width of the current reference block, the corresponding direction comprises a vertical direction and a horizontal direction; and

in the first predetermined case, skipping the sub-pixel search process for the current reference block in the corresponding direction comprises:

in a case where the gradient information in the vertical direction is less than the predetermined gradient threshold, skipping the sub-pixel search process for the current reference block in the vertical direction; and

in a case where the gradient information in the horizontal direction is less than the predetermined gradient threshold, skipping the sub-pixel search process for the current reference block in the horizontal direction.

3. The motion search processing method for video coding according to claim 1, wherein in the second predetermined case, skipping the sub-pixel search process for the current reference block in all directions comprises:

skipping the sub-pixel search process for the current reference block in all directions upon determining that pixels of the current reference block are in a predetermined smooth state based on the gradient information, the minimum rate distortion cost, and the sum of absolute transformed difference.

4. The motion search processing method for video coding according to claim 1, wherein the sub-pixel search comprises a half-pixel search and a quarter-pixel search, wherein the quarter-pixel search is performed after the half-pixel search, and a determination condition for skipping the sub-pixel search process is updated in real time.

5. The motion search processing method for video coding according to claim 1, wherein prior to the motion search of video coding, the method further comprises:

during a motion search for video pre-coding, comparing a rate distortion cost of a predicted optimal motion vector with a first predetermined cost threshold, and skipping the motion search for video pre-coding in a case where the rate distortion cost is less than or equal to the predetermined cost threshold.

6. The motion search processing method for video coding according to claim 5, wherein after comparing the rate distortion cost of the predicted optimal motion vector with the first predetermined cost threshold, the method further comprises:

performing integer-pixel search on reference blocks one by one, determining a reference block that is in a predetermined smooth motion state, and skipping an integer-pixel search process for a corresponding reference block.

7. The motion search processing method for video coding according to claim 5, wherein after comparing the rate distortion cost of the predicted optimal motion vector with the first predetermined cost threshold, the method further comprises:

performing integer-pixel search on reference blocks one by one, and skipping an integer-pixel search process for a current reference block in a case where a rate distortion cost of an optimal motion vector for the current reference block is less than an optimal intra-frame rate distortion cost for the current reference block and the rate distortion cost is less than a second predetermined cost threshold.

8. A motion search processing system for video coding, comprising:

a motion search module, configured to: during a motion search for video coding, determine an optimal starting point based on integer-pixel search, and perform sub-pixel search on reference blocks one by one starting from a reference block corresponding to the optimal starting point;

a first process skipping module, configured to: during the sub-pixel search, calculate gradient information of a current reference block in a corresponding direction, compare the gradient information with a predetermined gradient threshold, determine whether to skip a sub-pixel search process for the current reference block in the corresponding direction based on a comparison result, and in a first predetermined case, skip the sub-pixel search process for the current reference block in the corresponding direction; and

a second process skipping module, configured to: acquire a real-time minimum rate distortion cost and a sum of absolute transformed difference of an optimal mode for the current reference block, determine whether to skip a sub-pixel search process for the current reference block in all directions based on the gradient information, the minimum rate distortion cost, and the sum of absolute transformed difference, and in a second predetermined case, skip the sub-pixel search process for the current reference block in all directions.

9. A motion search processing device for video coding, comprising:

a memory and one or more processors;

wherein the memory is configured to store one or more programs, which when executed by the one or more processors, cause the one or more processors to perform the motion search processing method for video coding as defined in any one of claims 1 to 7.

10. A computer-readable storage medium, wherein the computer-readable storage medium stores one or more computer-executable instructions, which when executed by a processor of a computer, cause the computer to perform the motion search processing method for video coding as defined in any one of claims 1 to 7.

11. A computer program product, comprising one or more instructions, wherein the one or more instructions, when executed by a computer or a processor, cause the computer or the processor to perform the motion search processing method for video coding as defined in any one of claims 1 to 7.

During a motion search for video coding, determining an optimal starting point based on integer-pixel search, and performing sub-pixel search on reference blocks one by one starting from a reference block corresponding to the optimal starting point

S110

During the sub-pixel search, calculating gradient information of a current reference block in a corresponding direction, comparing the gradient information with a predetermined gradient threshold, determining whether to skip a sub-pixel search process for the current reference block in the corresponding direction based on a comparison result, and in a first predetermined case, skipping the sub-pixel search process for the current reference block in the corresponding direction

S120

Acquiring a real-time minimum rate distortion cost and a sum of absolute transformed difference of an optimal mode for the current reference block, determining whether to skip a sub-pixel search process for the current reference block in all directions based on the gradient information, the minimum rate distortion cost, and the sum of absolute transformed difference, and in a second predetermined case, skipping the sub-pixel search process for the current reference block in all directions

S130

FIG. 1

Acquire motion vectors of surrounding blocks → Traverse motion vectors to obtain the optimal motion vector predict — Integer-pixel search

Obtain the optimal reference block ← Quarter-pixel search ← Half-pixel search

FIG. 2

In a case where the gradient information in the vertical direction is less than the predetermined gradient threshold, skipping the sub-pixel search process for the current reference block in the vertical direction — S1201

In a case where the gradient information in the horizontal direction is less than the predetermined gradient threshold, skipping the sub-pixel search process for the current reference block in the horizontal direction — S1202

FIG. 3

Motion search module — 21

First process skipping module — 22

Second process skipping module — 23

FIG. 4

32    33

Memory    Communication module

Input apparatus    34

Processor    31

Output apparatus    35

FIG. 5

## INTERNATIONAL SEARCH REPORT

| International application No. |
|---|
| **PCT/CN2024/099372** |

| A. | CLASSIFICATION OF SUBJECT MATTER |
|---|---|
| | H04N19/137(2014.01)i |

According to International Patent Classification (IPC) or to both national classification and IPC

| B. | FIELDS SEARCHED |
|---|---|

Minimum documentation searched (classification system followed by classification symbols)

IPC：H04N

Documentation searched other than minimum documentation to the extent that such documents are included in the fields searched

Electronic data base consulted during the international search (name of data base and, where practicable, search terms used)

CNABS: CNTXT; VEN; USTXT; CJFD; CNKI: 运动, 搜索, 估计, 整像素, 分像素, 亚像素, 梯度, 阈值, 方向, 跳过, 最小, 失真, 代价, 预测, 残差, 绝对值, motion, search, estimation, whole-pixel, sub-pixel, gradient, threshold, direction, skip, minimum, distortion, cost, prediction, residual, absolute-value

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116962697 A (YOUBANDAO (BEIJING) INFORMATION TECHNOLOGY CO., LTD.) 27 October 2023 (2023-10-27) claims 1-11 | 1-11 |
| A | CN 104811728 A (HUNAN DAMU INFORMATION TECHNOLOGY CO., LTD.) 29 July 2015 (2015-07-29) description, paragraphs [0021]-[0077] | 1-11 |
| A | CN 115767101 A (BIGO TECHNOLOGY PTE. LTD.) 07 March 2023 (2023-03-07) entire document | 1-11 |
| A | CN 113438476 A (HANGZHOU BOYA HONGTU VIDEO TECHNOLOGY CO., LTD.) 24 September 2021 (2021-09-24) entire document | 1-11 |
| A | CN 112954365 A (JINGMEN HUIYIJIA INFORMATION TECHNOLOGY CO., LTD.) 11 June 2021 (2021-06-11) entire document | 1-11 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 August 2024** | **28 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/099372** |

**C.     DOCUMENTS CONSIDERED TO BE RELEVANT**

| Category* | Citation of document, with indication, where appropriate, of the relevant passages | Relevant to claim No. |
|---|---|---|
| A | CN 114071148 A (TENCENT TECHNOLOGY (SHENZHEN) CO., LTD.) 18 February 2022 (2022-02-18)<br>entire document | 1-11 |
| A | US 2009168887 A1 (MEDIATEK USA INC.) 02 July 2009 (2009-07-02)<br>entire document | 1-11 |
| A | US 2016014421 A1 (APPLE INC.) 14 January 2016 (2016-01-14)<br>entire document | 1-11 |

Form PCT/ISA/210 (second sheet) (July 2022)

## INTERNATIONAL SEARCH REPORT
### Information on patent family members

International application No.

**PCT/CN2024/099372**

| Patent document cited in search report | | | Publication date (day/month/year) | Patent family member(s) | | | Publication date (day/month/year) |
|---|---|---|---|---|---|---|---|
| CN | 116962697 | A | 27 October 2023 | None | | | |
| CN | 104811728 | A | 29 July 2015 | CN | 104811728 | B | 02 March 2018 |
| CN | 115767101 | A | 07 March 2023 | None | | | |
| CN | 113438476 | A | 24 September 2021 | CN | 113438476 | B | 25 January 2022 |
| CN | 112954365 | A | 11 June 2021 | None | | | |
| CN | 114071148 | A | 18 February 2022 | None | | | |
| US | 2009168887 | A1 | 02 July 2009 | EP | 2377324 | A1 | 19 October 2011 |
| | | | | EP | 2377324 | A4 | 18 July 2012 |
| | | | | WO | 2010080168 | A1 | 15 July 2010 |
| | | | | US | 8259809 | B2 | 04 September 2012 |
| US | 2016014421 | A1 | 14 January 2016 | US | 9380312 | B2 | 28 June 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310777782